# EUROPEAN PATENT APPLICATION

(11) **EP 1 256 495 A2**
(43) Date of publication of application: **13.11.2002**
(21) Application number: 02253171.9
(22) Date of filing: 07.05.2002
(51) Int. Cl.: B60R 27/00, G06F 15/02

(54) **Computing device**

(30) Priority: 07.05.2001 US 850455
(71) Applicant: Meritor Heavy Vehicle Technology, LLC, Troy, Michigan 48084 (US)
(72) Inventor: Chene, George, Sterling Heights, Michigan 48314 (US); French, Lee, Sterling Hrights, Michigan 48310 (US); Kramer, Dennis A., Troy, Michigan 48098 (US); Lawruk, Gerald D., Clarkston, Michigan 48348 (US); Muller, Brian Jeffrey, Sarasota, Florida 34240 (US); Ramsey, Reno V., Sterling Heights, Michigan 48313 (US); Shintaku, Wayne, Auburn Hills, Michigan 48326 (US); Worrall, Jack R., Novi, Michigan 48375 (US)
(74) Representative: Jones, John Bryn

(57) **Abstract**

A method of utilizing a vehicle driver log (36) is provided that includes the steps of navigating to a vehicle driver log input screen (32) and inputting the vehicle information. The method further includes the steps of inputting driver status information including driver duty (40) and driver activity (42) over time and displaying the vehicle driver log on a vehicle driver log screen. The method may be effectuated using a portable handheld computing device (10) including an input device (18, 26) for inputting the vehicle information and driver status information that includes the driver duty and driver activity. The computing device may include a processor (12) for processing the vehicle and driver status information. A display device (16) displays the vehicle driver log including the driver status information. A method for providing driver efficiency feedback is also provided. The method includes steps of monitoring vehicle operating parameters. The method also includes the steps of providing preferred operating parameters and comparing the vehicle operating parameters to the preferred operating parameters. The method includes the additional steps of determining a driver operating efficiency and graphically displaying the driver operating efficiency to the driver. The method is effectuated using a computing device (10) including a processor (12) for processing the vehicle operating parameters and comparing the vehicle operating parameters to the preferred operating parameters to determine driver operating efficiency. A memory (14) stores a preferred operating parameter, which is indicative of efficient vehicle operation. The vehicle sensors (28) provide the vehicle operating parameters, which are indicative of current vehicle operating conditions. A display device (16) graphically displays the driver operator efficiency to the driver so that the driver may modify driving behavior to operate the vehicle more profitably.

## Description

### BACKGROUND OF THE INVENTION

This invention relates to a computing device, particularly to a computing device for providing vehicle driver data to the driver in a graphical form, more particularly, the invention relates to providing vehicle driver data to the driver such as a driver log and driver efficiency feedback.

The commercial trucking industry is a regulated industry in that there are laws and regulations governing the manner in which a driver is permitted to operate a commercial vehicle. For example, there are commercial vehicle checkpoints, such as weigh stations, in which driver compliance with regulations is checked. One such regulation includes the number of hours the driver is permitted to operate the vehicle in a specified period of time with a specified time of sleep. Additionally, the driver is only permitted to travel at a particular distance over a period of time. Fleet management may also desire to monitor driver compliance. To this end, drivers typically maintain a driver log which tracks the amount of time the driver is on or off duty and the time spent sleeping or driving. This information has typically been recorded on graph paper in a format that is widely recognized by drivers and other individuals related with the commercial vehicle industry.

Several drawbacks exist with the drivers logs presently used within the industry. Paper logs cannot be readily downloaded to track cumulative driver performance. It is desirable to provide a portable driver log that may be taken from vehicle to vehicle, which may remain with a particular driver and be connected to an off board central computer.

Driver efficiency while operating the commercial vehicle is necessary to operate a profitable fleet. The driver may engage in inefficient behavior without knowing it. For example, the driver may excessively idle the engine or take inefficient travel routes. It is desirable to provide the driver with feedback of driver efficiency so that the driver may alter driving behavior to provide increased profit. Providing the driver with feedback of driving efficiency may also provide incentive to operate the vehicle more efficiently.

### SUMMARY OF THE INVENTION AND ADVANTAGES

The present invention provides a method of utilizing a vehicle driver log that includes the steps of navigating to a vehicle driver log input screen and inputting the vehicle information. The method further includes the steps of inputting driver status information including driver duty and driver activity over time and displaying the vehicle driver log on a vehicle driver log screen. The method may be effectuated using a portable handheld computing device including an input device for inputting the vehicle information and driver status information, which includes the driver duty and driver activity. The computing device may include a processor for processing the vehicle and driver status information. A display device displays the vehicle driver log including the driver status information.

The present invention also includes a method for providing driver efficiency feedback including the steps of monitoring vehicle operating parameters. The method also includes the steps of providing preferred operating parameters and comparing the vehicle operating parameters to the preferred operating parameters. The method includes the additional steps of determining a driver operating efficiency and graphically displaying the driver operating efficiency to the driver. The method is effectuated using a computing device including a processor for processing the vehicle operating parameters and comparing the vehicle operating parameters to the preferred operating parameters to determine driver operating efficiency. A memory stores a preferred operating parameter, which is indicative of efficient vehicle operation. The vehicle sensors provide the vehicle operating parameters, which are indicative of current vehicle operating conditions. A display device graphically displays the driver operator efficiency to the driver so that the driver may modify driving behavior to operate the vehicle more profitably.

Accordingly, the above invention provides methods and apparates that give the driver feedback as to driving efficiency and provide a portable driver log.

### BRIEF DESCRIPTION OF THE DRAWINGS

Other advantages of the present invention can be understood by reference to the following detailed description when considered in connection with the accompanying drawings wherein:
Figure 1 is a computing device of the present invention;
Figure 2 is a task screen displayed on the computing device of Figure 1;
Figure 3 is a driver log screen displayed on the computing device of Figure 1; and
Figure 4 is a driver operating efficiency screen displayed on the computing device of Figure 1.

### DETAILED DESCRIPTION OF A PREFERRED EMBODIMENT

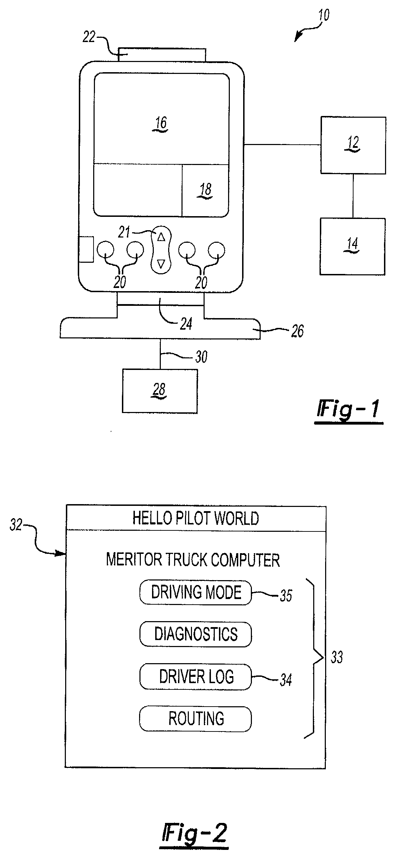

A portable handheld computing device 10 or PDA is shown in Figure 1. PDAs, or Personal Digital Assistants, such as a Palm Pilot® or Handspring® device, are desirable in that they are highly portable. The PDA 10 includes a processor 12 and a memory 14 for storing information received by the PDA 10. A display 16, preferably a touch screen, displays alpha-numeric characters and graphical information that may be easily viewed by the driver. The display 16 may include a input screen portion 18 by which alpha-numeric characters may be input into the PDA 10 utilizing a stylus. Information may also be input to the PDA 10 utilizing buttons 20 and up/down scroll button 21. The PDA 10 also includes other features for sending or receiving information. For example, the PDA 10 includes an infrared transmitter 22 for sending data to an infrared receiver. A dataport 24 may be connected to a data input device such as a cradle 26. The cradle 26 may be connected to the vehicle sensors and control systems 28 through a communications bus 30.

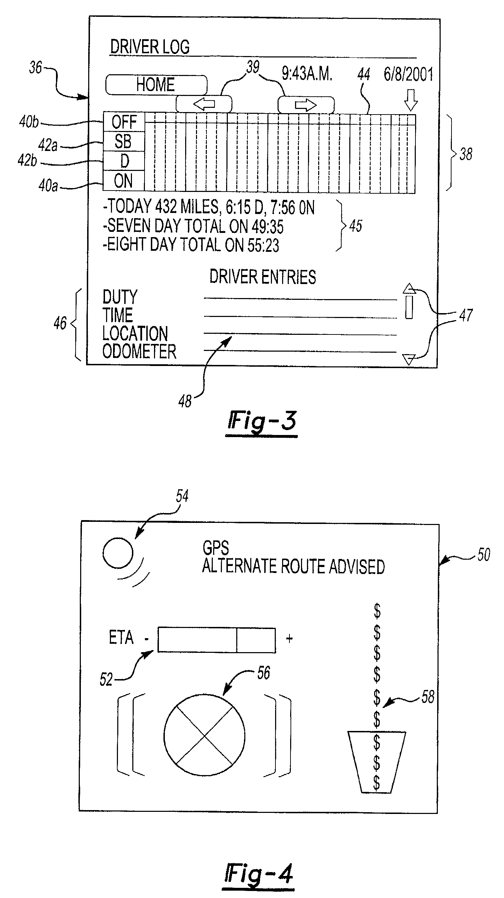

The PDA 10 may be used to generate and display a driver log. A driver may navigate to a driver log through task screen 32, which is shown in Figure 2. The task screen 32 includes icons 33 including a driver log icon 34 and a driver mode icon 35. The driver may navigate to a driver log screen 36, shown in Figure 3, by selecting the driver log icon 34 utilizing a stylus or other input device. The driver log 36 displays a driver status graph or log 38, which is widely recognized and used by vehicle drivers and other individuals in the commercial trucking industry.

Driver duty includes when the driver is on duty indicated at 40a ("ON"), and when the driver is off duty indicated at 40b ("OFF"). The driver activity 42 includes when the driver is sleeping indicated at 42a ("SB"), and when the driver is driving indicated at 42b ("D"). The driver status log 38 is utilized by drawing a line in the appropriate area for the particular time period. The log is automatically generated once the driving mode has been selected. Sleep is considered an off-duty driver activity while driving is considered an on-duty driver activity. The driver duty 40 and driver activity 42 may be input manually by selecting the driver mode icon 35 on the task screen 32. Alternatively, the driver duty 40 and driver status 42 may be changed automatically by sensing vehicle information. In this manner, the widely, industry recognized driver log is generated with little effort from the driver.

The driver duty may be automatically changed from off 40b to on 40a, for example, when the driver starts the engine of the vehicle. Moreover, the driver status log may be changed from on-duty 40a to driving 42b when a vehicle speed is sensed. Relevant vehicle information may also be input such as odometer reading, locations sensed by a GPS, time, date and other information typically available through the communications bus 30.

Driver log screen 36 may also include a table 46 displaying recent driver information 45 that will better enable the driver to ensure driver compliance with all relevant regulations and laws. Furthermore, the driver log screen 36 may include areas where the driver may input relevant vehicle information 48, such as location. The driver may scroll through the information using scroll buttons 39 and 47.

The driver is given driver efficiency feedback through graphical information displayed on a driver operating efficiency screen 50, shown in Figure 4. Vehicle operating parameters, such as engine braking, transmission shifting, vehicle routing, engine idle, driving pattern such as steering wheel activity, and other vehicle parameters are sensed using the vehicle sensors 28 and communicated to the computing device 10 through the communications bus 30. The above vehicle operating parameters and preferred operating parameters indicative of efficient vehicle operation are stored in the memory 14. The processor 12 compares the preferred operating parameters to the current vehicle operating parameters to determine driver operating efficiency. This information is then graphically displayed on the screen 16.

Estimated time of arrival 52 may be displayed to provide feedback to the driver. Additionally, the driver may be advised to take an alternate route 54 when GPS determines that a route is available to improve the estimated time of arrival. Driver steering may be monitored to determine driver fatigue. If driver fatigue exists the vehicle will not be operated as efficiently, in addition to safety concerns raised by driver fatigue. Typically, steering activity is indicative of driver fatigue. If steering inactivity is sensed a graphical indication 56 will be provided to the driver to increase driver alertness. A graphical indication 58 may also be provided to the driver to alert the driver of fuel waste to excessive engine idle, improper transmission shifting, or other wasteful activity that would have an adverse effect on efficient operation of the vehicle. Incentives may then be provided by fleet management to the driver to more efficiently operate the vehicle.

The invention has been described in an illustrated manner, and it is to be understood that the terminology that has been used is intended to be in a nature of words of description rather of limitation. Obviously, many modifications and variations of the present invention are possible in light of the above teachings. It is, therefore, to be understood that within the scope of the appended claims the invention may be practiced otherwise than as specifically described.

## Claims

1. A portable handheld computing device (10) for providing a vehicle driver log (36) comprising:
an input device (18, 26) for inputting vehicle information and driver status information including driver duty and driver activity over time;
a processor (12) for processing said vehicle and driver status information; and
a display device (16) for displaying a vehicle driver log including said driver status.

2. The device according to claim 1, wherein said driver duty includes on and off duty.

3. The device according to claim 1 or 2, wherein the driver activity includes driving and sleeping.

4. The device according to any preceding claim, wherein said display device includes a touch screen and said touch screen (18) provides said input device.

5. The device according to any preceding claim, wherein said input device includes vehicle sensors (28) connected to said portable handheld computing device by a communications bus (30).

6. A method of utilizing a vehicle driver log (36), comprising the steps of:
a) navigating to a vehicle driver log input screen (32);
b) inputting vehicle information;
c) inputting driver status information including driver duty (40) and driver activity (42) over time; and
d) displaying the vehicle driver log (36) including the driver status (38) on a vehicle driver log screen.

7. The device according to any one of claims 1 to 5, or the method according to claim 6, wherein said vehicle driver log is displayed as a graph or a table.

8. The method according to claim 6 or 7, wherein step a) or step b) includes using a touch screen.

9. The method according to any one of claims 6 to 8, wherein the vehicle driver log input screen and vehicle driver log screen are provided by a portable handheld computing device (10).

10. The method according to claim 9, wherein step b) includes using a stylus to input alpha-numeric characters on a input screen.

11. The method according to any one of claims 6 to 10, wherein step b) includes sending information through a vehicle communications bus (30) from a vehicle sensor (28).

12. The method according to any one of claims 6 to 11, wherein the driver status information is changed based on vehicle speed or upon engine condition.

13. A computer device for a vehicle for providing driver efficiency feedback comprising:
vehicle sensors (28) providing vehicle operating parameters indicative of current vehicle operating conditions;
a memory (14) storing preferred operating parameters indicative of efficient vehicle operation.
a processor (12) for processing said vehicle operating parameters and comparing said vehicle operating parameters to said preferred operating parameters to determine driver
operating efficiency; and
a display device (16) graphically displaying said driver operating efficiency to the driver.

14. The device according to claim 13, wherein said display device is provided by a portable handheld computing device (10).

15. The device according to claim 13 or 14, wherein a communications device (30) interconnects said vehicle sensors and said processor.

16. A method for providing driver efficiency feedback, comprising the steps of:
a) monitoring the vehicle operating parameters;
b) providing preferred operating parameters;
c) comparing the vehicle operating parameters to the preferred operating parameters;
d) determining a driver operating efficiency; and
e) graphically displaying the driver operating efficiency to the driver.

17. The device according to claims 13 to 15, or the method according to claim 16, wherein the vehicle operating parameters include at least one of engine braking, transmission shifting, engine idle and a driving pattern.
